Europäisches Patentamt

European Patent Office

Office européen des brevets

(11) Publication number: **0 159 509**
**B1**

## EUROPEAN PATENT SPECIFICATION

(45) Date of publication of patent specification: **04.01.89**

(21) Application number: **85102689.8**

(22) Date of filing: **09.03.85**

(51) Int. Cl.⁴: **G 21 C 7/10**

(54) An Improved control rod spider assembly for a nuclear reactor fuel assembly.

(30) Priority: **30.03.84 US 595163**

(43) Date of publication of application:
**30.10.85 Bulletin 85/44**

(45) Publication of the grant of the patent:
**04.01.89 Bulletin 89/01**

(84) Designated Contracting States:
**BE DE FR GB IT SE**

(56) References cited:
**EP-A-0 054 787**
**EP-A-0 079 828**
**DE-A-2 406 595**
**FR-A-1 560 777**
**US-A-4 326 919**

(73) Proprietor: **WESTINGHOUSE ELECTRIC
CORPORATION
Westinghouse Building Gateway Center
Pittsburgh Pennsylvania 15222 (US)**

(72) Inventor: **Francis, Trevor Andrew
504 Green Haven Court
Pittsburgh Pennsylvania 15239 (US)**

(74) Representative: **Patentanwälte Dipl.-Ing. R.
Holzer Dipl.-Ing. (FH) W. Gallo
Philippine-Welser-Strasse 14
D-8900 Augsburg (DE)**

Courier Press, Leamington Spa, England.

## Description

The present invention relates generally to nuclear reactors and more particularly to an improved control rod spider assembly for supporting a fixed array of control rods for vertical movement within the reactor.

In most nuclear reactors, the core portion comprises a large number of elongate fuel elements or rods grouped in and supported by frameworks referred to as fuel assemblies. The fuel assemblies are generally elongate and receive support and alignment from upper and lower transversely extending core support plates. Conventional designs of these fuel assemblies include a plurality of fuel rods and hollow tubes or guide thimbles held in an organized array by grids spaced along the fuel assembly length and attached to the guide thimbles. Top and bottom nozzles on opposite ends thereof are secured to the guide thimbles, thereby forming an integral fuel assembly. Generally, in most reactors, a fluid coolant, such as water, is directed upwardly through apertures in the lower core support plate and along the various fuel assemblies to receive the thermal energy therefrom.

One method of controlling the reactivity within the core involves the use of neutron absorbing elements or rods, commonly referred to as "control rods", which are moved into and out of the core region and generally comprise a material having a high neutron absorption cross-section, such as boron carbide, tantalum, a combination of silver-indium and cadmium, or the like, as well known in the art.

One common arrangement utilizing control rods in conjunction with a fuel assembly is disclosed in US-A-4,326,919 which shows the control rods as being supported at their upper ends from a spider assembly which, in turn, is connected to a control drive mechanism for vertically raising and lowering (referred to as a stepping action) the control rods within hollow guide thimbles of the fuel assembly. The spider assembly includes a plurality of radially extending vanes supported on and circumferentially spaced about a central hub. The vanes are flat metal plates, positioned on edge and with the top edge of each plate tapered inwardly and upwardly from its outer terminal end toward the central hub. The vanes have a configuration similar to that of a pennant, and thus provide an inner end-edge of sufficient axial height or length to mount the vanes on the central hub. Cylindrical control-rod connecting fingers are mounted on the vanes, some of the vanes having one connecting finger associated therewith and others having two. The fingers closest to the central hub are at a higher elevation than those more distant therefrom, due to the use of the pennant-shaped vanes and to mounting the vanes on the central hub at different axial locations. The inner fingers in a higher position serve to align the spider assembly as it is raised into the upper internals of the reactor. The vanes and the fingers are manufactured as separate components and then welded together to form a vane-finger sub-unit. The vane-finger sub-units are then welded to the central hub so as to form an integral unit. As can be appreciated, there are several manufacturing steps and welding operations to be performed in making this spider assembly. In addition, each of the welds must be inspected to ensure that it is sound and capable of sustaining the load of the control rods as well as the various moment forces generated during stepping.

Reactor-core designers are constantly striving, not only to increase the overall efficiency of reactors, but also to provide for a more orderly control and management of a reactor so as to ensure safety. Changes and improvements made toward this end in one area or to a component quite often necessitate changes or modifications to be made in another area or to another component of the reactor. One such area of change has been in the development of new control rods to be used with more recently designed fuel assemblies employing fewer rods but which rods are of a substantially increased size. For example, each of the sixteen control rods used in the fuel assembly shown in the above-mentioned US-A-4,326,919 have a diameter of approximately 7.5 mm, whereas some of the fuel assemblies of newer design require only eight control rods having a diameter of approximately 22.5 mm. Thus, a new spider assembly is needed to support these new and larger rods, one which must be sufficiently strong and structurally rigid not only to support the heavier weight of the new rods but also to be capable of withstanding the larger moment forces generated during a stepping action. From a cost standpoint, it is also highly desirable for such new spider design to reduce the manufacturing, welding and assembly steps as well as weld inspections associated with the fabrication of spider assemblies in the past.

It is the principal object of the invention to satisfy the above needs.

Accordingly, the invention resides in a spider assembly having a central hub, a plurality of vanes spaced apart circumferentially about the hub and extending radially therefrom, and a plurality of fingers associated with each of said vanes for connection to the control rods, which spider assembly is characterised in that each of said vanes, together with the fingers thereon, is of a monolithic one-piece contruction forming a rigid structural sub-unit devoid of joints, and that said hub is tubular and has formed in the wall thereof a plurality of slots extending substantially parallel to the longitudinal axis of the tubular hub and spaced apart circumferentially about the hub, each of said vanes having at one end thereof an integral extension which is firmly seated in one of said slots so as to position the vane in proper relationship with respect to the other vanes on the hub, and each of said slots communicating with the space within the tubular hub to facilitate joining of the associated vane to the hub.

The term "monolithic", as used herein means that, each vane-and-finger sub-unit is cast as a single piece or formed, e.g. swaged, from a single piece of stock, as distinct from conventional vane-and-finger constructions which are composed of individual parts joined, e.g. welded, together. It will be appreciated that, compared with such conventional constructions, the monolithic construction according to the invention substantially reduces the number of steps and the amount of time required to make a spider assembly and, moreover, maximizes the ability to withstand the moment forces experienced during a stepping action. In order to further enhance this ability, the vanes of the spider assembly embodying the invention preferably are of substantially constant height, having regard to the axial direction of the hub. Furthermore, all of the vanes preferably are mounted on the central hub at the same axial height location so as to further simplify the fabrication of the spider assembly while, at the same time, maintaining the desired feature of extending the fingers nearer the hub axially above the fingers more distant from the hub so that they will assist in aligning the spider assembly with the upper internals of the reactor.

A preferred embodiment of the invention will now be described, by way of example only, with reference to the accompanying drawings, in which:

Figure 1 is an elevational, partly sectional view showing a fuel assembly in vertically foreshortened form and with parts thereof broken away for clarity, together with a portion of an upper core support plate and with the spider assembly embodying the invention;

Figure 2 is an enlarged top plan view of the spider assembly;

Figure 3 is a sectional view of the spider assembly as taken along line 3-3 of Figure 2; and

Figure 4 is an enlarged, exploded view of one of the vane-and-finger sub-units and of a portion of the central hub of the spider assembly.

In the following description, like reference characters designate like or corresponding parts throughout the several views, and terms such as "forward", "rearward", "left", "right", "upwardly", "downwardly", and the like, are used as words of convenience not to be construed as limiting terms.

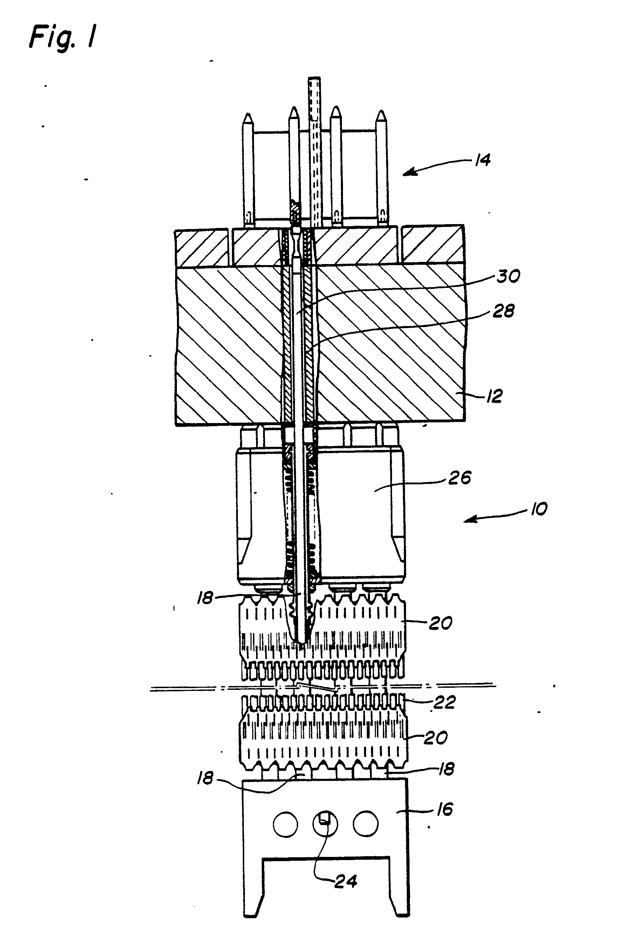

Referring now to the drawings, and particularly to Figure 1, there is shown an overall combination (interface) of a fuel assembly 10, an upper core support plate 12 disposed above and extending across the fuel assembly 10, and the improved spider assembly 14 embodying the invention.

The fuel assembly 10 basically comprises a lower end structure or bottom nozzle 16 for supporting the assembly on the lower core plate in the core region of a reactor (not shown); a number of guide tubes or thimbles 18 longitudinally projecting upward from the bottom nozzle 16; a plurality of transverse grids 20 axially spaced along the guide thimbles 18; and organized array of elongate fuel rods 22 transversely spaced and supported by the grids 20;

and instrumentation tube 24 located in the center of the assembly; and an upper end structure or top nozzle 26 attached to the upper ends of the guide thimbles 18 to form therewith an integral assembly capable of being conventionally handled without damaging the assembly components. The fuel assembly 10 does not form part of the invention proper and, therefore, will not be described herein in further detail.

The upper core support plate 12, being conventional, extends across the top of the fuel assembly 10 as well as across the top of the other fuel assemblies (not shown) within the core. The core plate 12 has a multiplicity of coolant flow passages 28 (only one of which is seen in Figure 1) which allow coolant to pass upwardly through the core. At least some of these passages or openings are axially aligned with guide thimbles 18 so as to enable control rods 30 to be inserted through the core plate passages and into the guide thimbles 18 of fuel assembly 10.

Connected to the upper ends of the control rods 30 is the spider assembly 14 which supports the control rods for vertical movement thereof within the guide thimbles 18 by means of a conventional drive mechanism (not shown). It should be noted that although the spider assembly is shown in Figure 1 as disposed above the core plate 12, upon which it will seat when the control rods 30 are fully inserted in the guide thimbles 18, there are other arrangements with which the spider assembly 14 could be utilized and in which it would be located between the bottom of the core plate and the top of the fuel assembly.

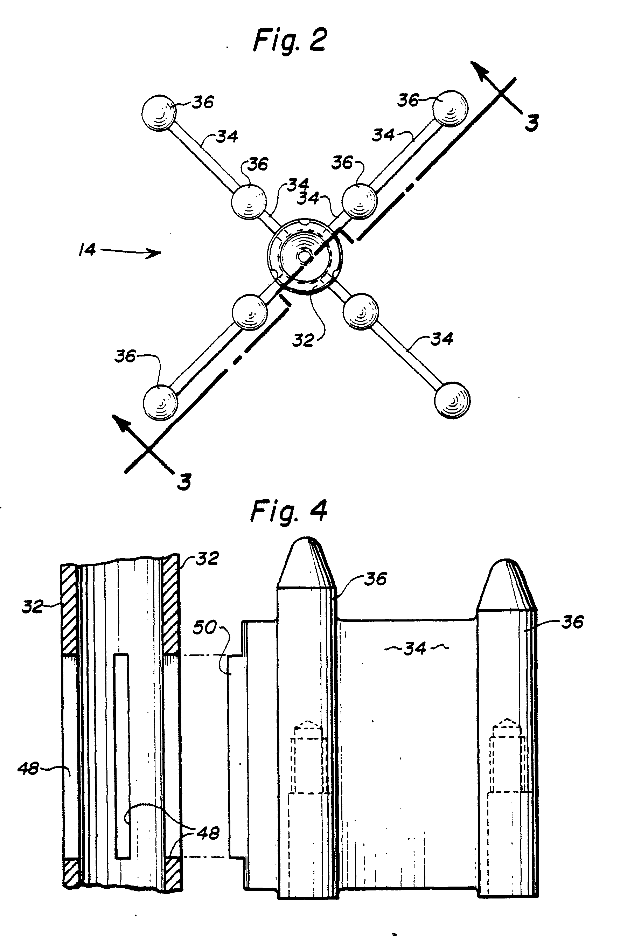

Referring now to Figures 2, 3 and 4 of the drawings, the spider assembly 14 comprises a central hub 32, a plurality of vanes 34 radially extending outwardly from the hub 32, and a plurality of fingers 36 on the vanes 34 for connection with the upper ends of the control rods 30.

The central hub 32 is preferably in the form of an elongate cylindrical tube having a solid upper neck portion 38 formed integral therewith and including an internally threaded segment 40 for connection to the drive mechanism (not shown) of the reactor which is employed to raise and lower the assembly together with the control rods when in use, as well known in the art. The tubular hub 32 houses a load absorbing mechanism in the form of a coil spring 42 which is held partially compressed between a nipple 44, slidably supported in the lower end of the tube, and the inner face of neck portion 38. A bolt 46 extends through an opening in the end wall of the nipple 44 and axially through the coil spring 42, and it is threadably engaged with the neck portion 38, the arrangement being such that the compression and hence force of the spring 42 can be adjusted by turning the bolt 46. The lower end of the nipple 44 is adapted to seat in a shallow cavity (not shown) in the top surface of the core plate 12 so as to assist in proper alignment of the control rods 30 with the core plate openings 28 of the core plate and with the guide thimbles 18. As well known, the primary purpose of such absorbing mechanism is to prevent shock loading of the core plate and the fuel assembly as the spider assembly 14 engages the top of the core plate 12 upon full insertion of the control rods into the guide thimbles. As seen from Figure 4, the tubular hub 32 has a plurality of circumferentially spaced vertical slots 48 extending through the wall thereof, which slots 48 preferably are all at the same axial or height location on the tube.

As best seen from Figure 2, in the preferred embodiment, there are four vanes 34 each having two fingers 36 associated therewith. The vanes 34 are in the form of linear bars whereas the fingers 36 have the form of elongate cylinders with dome-shaped upper ends. It should be noted that the diameter of each finger 36 is greater than the transverse thickness of the vane portion extending between any two fingers on a given vane-finger sub-unit. In order to maximize structural rigidity and, in addition, to reduce manufacturing costs, each vane 34 together with its two associated fingers 36 is formed as a sub-unit of one-piece construction. The preferred method of manufacturing such a vane-finger sub-unit is by machining, in accordance with well-known techniques, a bar stock to conform to the desired configuration as shown.

At its inward end, each vane-finger sub-unit has an integral extension 50 (Fig. 4) of dimensions such as to be fit tightly into one of the slots 48 of the hub 32, thereby to properly position the vane-finger sub-unit on the hub to which it can then be rigidly joined in a suitable manner, such as by brazing or the like. Due to the slots, a suitable weld can be easily obtained because they allow gases generated for the brazing operation to escape to the atmosphere. Either after or before (normally before) the vane-finger sub-units are brazed to the hub 32, the lower end portion of each finger 36 is drilled and internally threaded for connection to the upper end of a control rod. From the above, it will be appreciated that fabricating the spider assembly 14 requires only a few steps, and substantially fewer than are involved in making conventional spider assemblies.

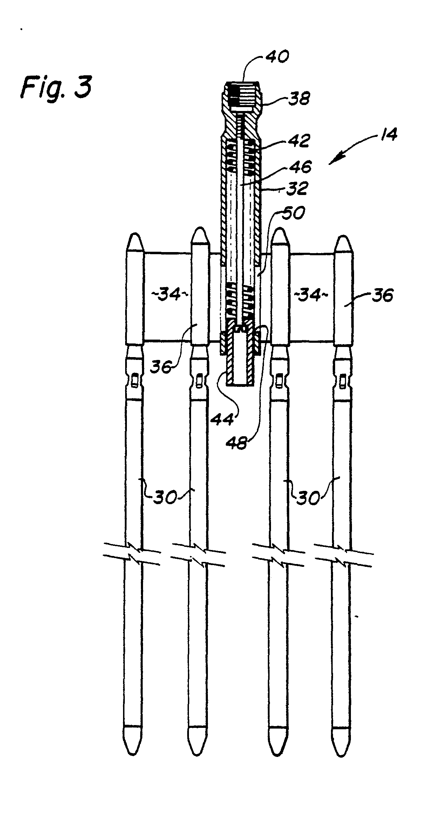

Again as seen from Figure 2, in the preferred embodiment, the vanes 34 are angularly spaced about the circumference of the central hub 32 approximately ninety degrees apart so that vertical planes extending through the vanes which are diametrically opposed to each other are in orthogonal relationship one to the other. The two fingers 36 associated with each vane 34 are spaced apart, one finger (the outer finger) being located at the outer distal end of the vane, and the other or inner finger being located between the outer finger and the hub 32. As best seen from Figures 2 and 4, the relationship of the outer and inner fingers 36 with respect to the hub 32 is such that their vertical axes are parallel to one another as well as to the vertical axis of the hub 32, and that the vertical axes of the inner and outer fingers associated with any one vane lie in the same plane as the vertical axis of the hub. As apparent from Figures 3 and 4, the configuration and relationship of the vanes 34 are such that the portion of each vane extending between the hub 32 and the inner finger (first or inner vane portion), and the portion of the vane extending between the inner finger and the outer finger (second or outer vane portion) lie in the same vertical plane and are each rectangular as viewed in elevation. Furthermore, the upper edge and the lower edge of the first vane portion are collinear with the respective upper and lower edges of the second vane portion. Moreover, these respective upper and lower collinear edges are parallel to one another. The rectangular vane portion on any given vane rigidly interconnects the associated fingers and maintains them in proper relationship with respect to one another as well as to the central hub, thus preventing deformation of the spider assembly 14 when subjected to large moment forces such as experienced during stepping action. With particular reference to Figure 4, it will be noted also that the axial height of the inner finger above the upper edge of the vane is greater than the axial height of the outer finger above the upper edge of the vane. This axial extension of the inner fingers beyond the outer fingers facilitates the proper alignment of the spider assembly with the upper internals of the reactor.

## Claims

1. A spider assembly for supporting a plurality of control rods for vertical movement in a nuclear reactor, said spider assembly having a central hub, a plurality of vanes spaced apart circumferentially about said hub and extending radially therefrom, and a plurality of fingers associated with each of said vanes for connection to the control rods, characterized in that each of said vanes (34), together with the fingers (36) thereon, is of a monolithic one-piece construction forming a rigid structural sub-unit devoid of joints, and that said hub (32) is tubular and has formed in the wall thereof a plurality of slots (48) extending substantially parallel to the longitudinal axis of the tubular hub and spaced apart circumferentially about the hub, each of said vanes (34) having at one end thereof an integral extension (50) which is firmly seated in one of said slots (48) so as to position the vane in proper relationship with respect to the other vanes on the hub, and each of said slots (48) communicating with the space within the tubular hub to facilitate joining of the associated vane to the hub.

2. A spider assembly according to claim 1, characterized in that each finger (36) is of elongate cylindrical shape, the fingers (36) on each vane (34) having their longitudinal axes parallel with respect to each other and to the longitudinal axis of the tubular hub (32), and said longitudinal axes of the fingers on each vane and of said tubular hub lying in a common plane.

3. A spider assembly according to claim 1 or 2, characterized in that there are four of said vanes (34) each having two of said fingers (36) associated therewith.

4. A spider assembly according to claim 3, characterized in that the four vanes (34) are angularly spaced substantially ninety degrees apart.

5. A spider assembly according to claim 3 or 4, characterized in that each vane (34) has a first one of the two fingers (36) thereon disposed at the outer distal end of the vane and has the second finger (36) located between the first finger and said hub (32).

6. A spider assembly according to claim 5, characterized in that each vane (34) has a first linear portion extending between said hub (32) and said second finger, and a second linear portion extending between the second finger and said first finger, the two linear vane portions having upper edges thereof collinear with respect to each other, and having lower edges thereof collinear with respect to each other.

7. A spider assembly according to claim 6, characterized in that the two fingers (36) on each vane (34) project axially beyond the upper edge of the vane, said second finger projecting farther than said first finger.

8. A spider assembly according to any one of the preceding claims, characterized in that each finger (36) has a diameter greater than the transverse thickness of the associated vane (34).

**Patentansprüche**

1. Jochanordnung zur vertikal beweglichen Halterung einer Mehrzahl von Steuerstäben in einem Kernreaktor, wobei die Jochanordnung eine mittige Nabe, eine Anzahl von umfangsmäßig mit Abständen um die Nabe herum angeordneten und radial davon wegragenden Armen und eine Anzahl von jedem der Arme zugeordneten Fingern zur Verbindung mit den Steuerstäben aufweist, dadurch gekennzeichnet, daß jeder der Arme (34) zusammen mit den daran befindlichen Fingern (36) eine monolithische einstückige Konstruktion ist, die eine starre Unterbaugruppe ohne Verbindungen bildet, und daß die Nabe (32) rohrförmig ist und in ihrer Wand eine Anzahl von Schlitzen (48) aufweist, die im wesentlichen parallel zur Längsachse der rohrförmigen Nabe verlaufen und mit gegenseitigen Umfangsabständen um die Nabe verteilt sind, wobei jeder der Arme (34) an seinem einen Ende einen einstückigen Ansatz (50) aufweist, der fest in einen der Schlitze (48) eingesetzt ist, um den Arm in genauer Beziehung bezüglich der anderen Arme an der Nabe zu positionieren, und wobei jeder der Schlitze (48) mit dem Raum innerhalb der rohrförmigen Nabe in Verbindung steht, um das Verbinden des zugehörigen Armes mit der Nabe zu erleichtern.

2. Jochanordnung nach Anspruch 1, dadurch gekennzeichnet, daß jeder Finger (36) eine längliche zylindrische Form hat und die Längsachsen der Finger (36) jedes Armes (34) parallel zueinander und zur Längsachse der rohrförmigen Nabe (32) verlaufen, und daß die Längsachsen der Finger jedes Armes und die Längsachse der rohrförmigen Nabe in einer gemeinsamen Ebene liegen.

3. Joachanordnung nach Anspruch 1 oder 2, dadurch gekennzeichnet, daß vier Arme (34) vorgesehen sind, denen jeweils zwei Finger (36) zugeordnet sind.

4. Jochanordnung nach Anspruch 3, dadurch gekennzeichnet, daß die vier Arme (34) jeweils einen Winkelabstand von etwa 90° voneinander haben.

5. Jochanordnung nach Anspruch 3 oder 4, dadurch gekennzeichnet, daß jeder Arm (34) einen ersten der beiden Finger (36) am äußeren distalen Ende des Armes trägt und der zweite Finger (36) zwischen dem ersten Finger und der Nabe (32) angeordnet ist.

6. Jochanordnung nach Anspruch 5, dadurch gekennzeichnet, daß jeder Arm (34) einen ersten geradlinigen Teil, der zwischen der Nabe (32) und dem zweiten Finger verläuft, und einen zweiten geradlinigen Teil aufweist, der zwischen dem zweiten Finger und dem ersten Finger verläuft, und daß die beiden geradlinigen Armteile zueinander kolineare Oberkanten und zueinander kolineare Unterkanten aufweisen.

7. Jochanordnung nach Anspruch 6, dadurch gekennzeichnet, daß die beiden Finger (36) jedes Armes (34) axial über die Oberkante des Arms hinausragt, wobei der zweite Finger weiter hinausragt als der erste Finger.

8. Jochanordnung nach einem der vorhergehenden Ansprüche, dadurch gekennzeichnet, daß jeder Finger (36) einen Durchmesser hat, der größer als die in Querrichtung gemessene Dicke des zugehörigen Armes (34) ist.

**Revendications**

1. Agencement d'araignée pour supporter une pluralité de barres de commande en vue de leur déplacement vertical dans un réacteur nucléaire, ledit agencement d'araignée ayant un moyeu central, une pluralité d'ailettes espacées les unes des autres sur la périphérie du moyeu et s'étendant radialement depuis celui-ci, et une pluralité de doigts associés à chacune desdites ailettes pour les relier aux barres de commande, caractérisé en ce que chacune des ailettes (34), avec les doigts (36) sur celle-ci, est une construction monolithique d'une seule pièce formant un sous-ensemble structural rigide exempt de raccords, et en ce que le moyeu (32) est tubulaire et a, formées dans la paroi de celui-ci, une pluralité de rainures (48) s'étendant sensiblement parallèlement à l'axe longitudinal du moyeu tubulaire et espacées les unes des autres sur la périphérie du moyeu, chacune des ailettes (34) ayant à une de ses extrémités un prolongement (50) qui en fait partie intégrante et qui est fermement calé dans une des rainures (48) de façon à disposer correctement l'ailette par rapport aux autres ailettes montées sur le moyeu, et chacune des rainures (48) communiquant avec l'espace intérieur du moyeu tubulaire pour faciliter l'assemblage de l'ailette associée et du moyeu.

2. Agencement d'araignée selon la revendication 1, caractérisé en ce que chaque doigt (36) a une forme cylindrique allongée, les doigts (36) disposés sur chaque ailette (34) ayant leurs axes longitudinaux parallèles mutuellement et parallèles à l'axe longitudinal du moyeu tubulaire (32), et lesdits axes longitudinaux des doigts disposés sur chaque ailette du moyeu tubulaire se trouvant dans un plan commun.

3. Agencement d'araignée selon la revendication 1 ou 2, caractérisé en ce que les ailettes (34) sont au nombre de quatre, à chacune d'entre elles étant associés deux des doigts (36).

4. Agencement d'araignée selon la revendication 3, caractérisé en ce que les quatre ailettes (34) sont espacées angulairement les unes des autres sensiblement de quatre-vingt-dix degrés.

5. Agencement d'araignée selon la revendication 3 ou 4, caractérisé en ce que chaque ailette (34) a un premier des deux doigts (36) disposé sur celle-ci à l'extrémité distale extérieure de l'ailette et a le second doigt (36) situé entre le premier doigt et le moyeu (32).

6. Agencement d'araignée selon la revendication 5, caractérisé en ce que chaque ailette (34) a une première partie linéaire qui s'étend entre le moyeu (32) et ledit second doigt, et une seconde partie linéaire qui s'étend entre le second doigt et ledit premier doigt, les deux parties linéaires de l'ailette ayant leurs bords supérieurs co-linéaires l'un par rapport à l'autre, et ayant leurs bords inférieurs co-linéaires l'un par rapport à l'autre.

7. Agencement d'araignée selon la revendication 6, caractérisé en ce que les deux doigts (36) présents sur chaque ailette (34) dépassent axialement du bord supérieur de l'ailette, ledit second doigt dépassant davantage que ledit premier doigt.

8. Agencement d'araignée selon l'une quelconque des revendications précédentes, caractérisé en ce que chaque doigt (36) a un diamètre supérieur à l'épaisseur transversale de l'ailette (34) associée.

# Fig. 1

## Fig. 2

## Fig. 4

2

Fig. 3